# FASCICULE DE BREVET EUROPEEN

(11) **EP 1 314 319 B1**
(45) Date de publication et mention de la délivrance du brevet: **08.12.2004**
(21) Numéro de dépôt: 01984129.5
(22) Date de dépôt: 05.07.2001
(51) Int. Cl.: H04N 7/173

(54) **DISPOSITIF SERVEUR DE TELEREALISATION MULTI-REALISATEUR EN LIBRE-SERVICE ET DE TELEDIFFUSION ET RESEAU DE TELEVISION**
MEHRBENUTZER FERNPRODUKTION UND ÜBETRAGUNGSERVER UND RUNDFUNKNETZWERK
SELF-SERVICE MULTIPLE-DIRECTOR REMOTE PRODUCTION AND PROGRAMME BROADCASTING SERVER DEVICE AND TELEVISION NETWORK

(30) Priorité: 06.07.2000 FR 0008812
(43) Date de publication de la demande: 28.05.2003
(73) Titulaire: CENTRE NATIONAL D'ETUDES SPATIALES, F-75001 Paris (FR)
(72) Inventeur: BEAS-GARCIA, Jacques, F-31400 Toulouse (FR); RIMBERT, François, F-31300 Toulouse (FR); GELARD, Patrick, F-31450 Donneville (FR); CHIBAUDEL, Philippe, F-31570 Lanta (FR); RUMEAU, Robert, F-31130 Balma (FR)
(74) Mandataire: Cabinet BARRE LAFORGUE & associés
(86) Numéro de dépôt international: PCT/FR2001/002163
(87) Numéro de publication internationale: WO 2002/003697

(56) Documents cités:
- EP-A- 0 696 127
- WO-A-97/26608
- WO-A-98/16045
- US-A- 5 570 126
- US-A- 5 684 799
- US-A- 5 880 792
- US-A- 6 006 257
- JOS ALVEAR: "REALNETWORKS' REALAUDIO AND REALVIDEO" , PAGE(S) 183-202 XP002150113 le document en entier

## Description

L'invention concerne un dispositif serveur de téléréalisation multi-réalisateur en libre-service et de télédiffusion d'émissions sur au moins un réseau de télévision. Elle s'étend aussi à un réseau de télévision comprenant au moins un tel dispositif.

Les réseaux de télévision publics ou privés peuvent être des réseaux hertziens, câblés ou satellites, analogiques ou numériques, monocanal ou multicanaux. Les émissions diffusées sur chaque canal (chaîne) sont réalisées par un producteur unique qui en contrôle et en réalise l'entier contenu selon une grille de programmation qu'il définit seul.

Par ailleurs, avec le développement des réseaux de transmission d'informations numériques tels que le réseau Internet ou les réseaux intranet, il est possible (cf. par exemple http://www.real.com) de diffuser, sur ces réseaux, des émissions de type émissions de télévision ou de radio. Dans ce cas, tout utilisateur équipé de moyens de réalisation et qui en maîtrise la technologie peut lui-même créer des émissions et les diffuser ou recevoir de telles émissions avec son ordinateur connecté au réseau de transmission d'informations numériques. Néanmoins, outre le fait que la qualité de ces émissions est largement affectée par les performances médiocres des lignes de transmission actuelles, de telles chaînes de télévision ou de radio ne sont accessibles que par les personnes possédant un ordinateur pouvant être connecté au réseau et qui maîtrisent la technologie et le savoir-faire informatique nécessaires à son utilisation. Or, de nombreuses personnes ne sont pas encore équipées d'ordinateur et/ou n'en maîtrisent pas l'utilisation, et sont par contre des téléspectateurs fidèles et réguliers.

On connaît aussi des dispositifs informatiques permettant à un producteur de réaliser et gérer une chaîne de télévision, et d'en contrôler la télédiffusion par l'intermédiaire d'un dispositif de télédiffusion vidéo recevant les informations du dispositif informatique et les émettant sur un canal de réseau de télévision.

On connaît également (US-5684799 ; US-5570126...) de nombreux systèmes de télévision interactive dans lesquels chaque téléspectateur utilisateur peut interagir avec les producteurs d'émission afin notamment d'effectuer des sélections individuelles des émissions qu'il reçoit individuellement.

Dans tout le texte, le terme "réaliser" et ses dérivés ("réalisation", "réalisateur"...) désignent le fait pour une personne, dite "réalisateur", de pouvoir concevoir, construire et générer une séquence d'informations graphiques ou audiovisuelles pouvant être télédiffusée de façon automatique sans interruption d'un instant de début à un instant de fin, à partir de son lancement, et, si nécessaire, enregistrée en tant que telle. En particulier, une simple sélection d'une séquence déjà réalisée et enregistrée n'est pas une réalisation au sens de la présente invention. La réalisation d'une séquence ou émission au sens de la présente invention suppose des prises de vue et/ou la construction de graphismes, images, textes, animations, effets, vidéo, sons... et/ou des sélections multiples sur des informations réalisées par d'autres.

Les termes "téléréaliser" et ses dérivés ("téléréalisation", "téléréalisateur",...) désignent ainsi le fait de réaliser des séquences à distance, via des moyens de télécommunication et/ou télétransmission (réseau de transmission d'informations numériques). De même, le terme "télédiffuser" et ses dérivés ("télédiffusion"...) désignent le fait de dérouler et d'émettre sur un canal d'un réseau de télévision à destination de chaque récepteur téléspectateur apte et autorisé à recevoir ce canal, une séquence en lecture sans interruption et de façon automatique à partir de son lancement, à la manière des émissions traditionnelles de télévision. Dans le cas le plus courant d'une pluralité de récepteurs téléspectateurs, ils reçoivent tous simultanément ladite séquence émise (émission).

Aucun des dispositifs ou systèmes connus ne procure sur un réseau de télévision traditionnel des fonctionnalités de "téléréalisation", c'est-à-dire permettant la téléréalisation d'émissions par l'un quelconque d'une pluralité de téléréalisateurs, télédiffusées sur un réseau de télévision traditionnel, (c'est-à-dire pouvant être capté par des postes récepteurs de télévision standards). Or, les inventeurs ont déterminé qu'un tel dispositif procurerait des avantages importants et pourrait faire l'objet de nombreuses applications.

Ainsi, il serait avantageux de permettre à toute personne appartenant à un groupe prédéterminé de téléréaliser et télédiffuser, auprès des différents téléspectateurs recevant au moins un canal de réseau de télévision, toutes informations ou émissions de son choix.

L'invention vise donc à proposer un dispositif serveur de téléréalisation multi-réalisateur en libre-service, c'est-à-dire sur lequel toute personne appartenant à un groupe prédéterminé est susceptible de pouvoir téléréali ser et télédiffuser sur au moins un réseau de télévision privé ou public, au moins des informations graphiques (télétexte, images, animations, effets d'affichage, vidéo...) de son choix par simple utilisation à distance du dispositif serveur.

L'invention vise aussi à proposer un tel dispositif serveur extrêmement peu coûteux à l'investissement et à l'utilisation. L'invention vise aussi à proposer un tel dispositif serveur dont l'installation et l'emploi sont simples et qui peut facilement être utilisé par toute personne sachant utiliser un micro-ordinateur de connexion à un réseau de transmission d'informations numériques tel que. le réseau Internet, même par les non-spécialistes de l'informatique. L'invention vise encore à proposer un réseau de télévision comprenant au moins un canal procurant des fonctionnalités de téléréalisation multi-réalisateur en libre-service.

L'invention concerne donc un dispositif serveur de téléréalisation multi-réalisateur en libre-service et de télédiffusion automatique d'émissions sur un canal d'au moins un réseau de télévision à destination de chaque téléspectateur apte et autorisé à recevoir ce canal, ce dispositif serveur comprenant :
- au moins un dispositif informatique, dit dispositif de télédiffusion comportant :
   . un contrôleur d'écran,
   . des moyens de capture et de conversion automatique des séquences d'informations graphiques adressées au contrôleur d'écran et traitées par le contrôleur d'écran, adaptés pour générer au moins un signal vidéo qui représente ces séquences d'informations graphiques, et qui est compatible avec au moins un réseau de télévision,
   . des moyens de raccordement monocanal sur un réseau de télévision adaptés pour émettre, sur ledit canal, un tel signal vidéo issu des moyens de capture et de conversion automatique,
- des ressources informatiques et des moyens de connexion, dits moyens de connexion d'entrée, à au moins un premier réseau de transmission d'informations numériques, les ressources informatiques et les moyens de connexion d'entrée étant adaptés pour :
   . autoriser l'établissement d'une communication avec au moins un téléréalisateur OPi distant quelconque, dit téléréalisateur connecté, appartenant à un groupe de téléréalisateurs aptes et autorisés à établir une communication avec les ressources informatiques via au moins un tel premier réseau, en permettant à ce téléréalisateur connecté d'accéder à distance via le premier réseau aux ressources informatiques,
   . former des moyens informatiques de réalisation aptes à permettre à tout téléréalisateur OPi connecté d'accéder à au moins une partie des ressources informatiques et de téléréaliser, à l'aide de ces ressources informatiques dont il a le contrôle à distance via les moyens de connexion d'entrée, au moins une séquence d'informations graphiques apte à être transmise à un contrôleur d'écran,
   . transmettre au contrôleur d'écran d'au moins un dispositif de télédiffusion, au moins une séquence d'informations graphiques téléréalisée par au moins un téléréalisateur, de sorte que cette séquence est télédiffusée sur le canal du réseau de télévision.

Ainsi, la réalisation des séquences d'informations télédiffusées sur le canal du réseau de télévision peut être effectuée par chaque téléréalisateur à l'aide des ressources informatiques du dispositif serveur, chaque téléréalisateur pouvant avoir le contrôle de ces ressources informatiques à distance via les moyens de. connexion d'entrée.

L'invention permet et propose donc pour la première fois d'associer à un réseau de télévision, un réseau de téléréalisation multi-réalisateur (pouvant être qualifié de "multi-téléréalisateur") en libre-service, les téléréalisateurs (utilisateurs du dispositif serveur) pouvant utiliser le dispositif serveur à volonté, sur leur initiative, sans nécessiter l'assistance ou la supervision d'un tiers.

L'invention se distingue des systèmes de télévision interactive par de nombreux aspects. Dans la télévision interactive, les téléspectateurs peuvent sélectionner des programmes individuels, mais ne peuvent pas eux-mêmes réaliser une séquence télédiffusée sur un canal vers chaque téléspectateur ; dans l'invention, les téléréalisateurs peuvent être différents des téléspectateurs (au moins un téléspectateur -et en général une multitude de téléspectateurs- n'étant pas téléréalisateur) ; dans l'invention, les séquences téléréalisées sont télédiffusées à tous les téléspectateurs aptes et autorisés à recevoir le canal de télévision... L'invention concerne ainsi le mode de réalisation des émissions (interactif pour les téléréalisateurs) alors que la télévision interactive se préoccupe de la réception individuelle d'émissions préalablement réalisées.

Avantageusement et selon l'invention, le dispositif serveur comprend des moyens logiciels de gestion de réseaux permettant le télécontrôle du dispositif serveur par tout téléréalisateur connecté

Avantageusement et selon l'invention, ledit premier réseau est un réseau compatible IP ("Internet Protocol"), notamment le réseau public Internet. Ledit premier réseau peut être un réseau téléphonique public analogique ou numérique, ou encore un réseau privé téléphonique analogique ou numérique, ou un réseau privé informatique numérique (intranet, extranet...). On sait en particulier que les réseaux téléphoniques permettent la transmission d'informations numériques.

Chaque téléréalisateur distant du dispositif serveur est lui-même équipé de moyens informatiques et de connexion lui permettant de se connecter sur ledit premier réseau, et d'accéder à distance, en client, aux ressources informatiques du dispositif serveur. Les moyens informatiques de chaque téléréalisateur et lesdites ressources informatiques doivent être compatibles. Autrement dit, un dispositif serveur selon l'invention comprend des ressources informatiques compatibles avec les moyens informatiques de chaque téléréalisateur susceptible de se connecter, c'est-à-dire appartenant audit groupe. Si nécessaire, rien n'empêche de multiplier, dans un dispositif serveur selon l'invention, les ressources informatiques, et notamment d'implanter différents systèmes d'exploitation standards (WINDOWS®, WINDOWS NT®, LINUX®, UNIX®...). Dans ce dernier cas, les ressources informatiques comprennent avantageusement plusieurs systèmes informatiques distincts, eux-mêmes distincts du dispositif de diffusion. Des moyens de routage peuvent être intégrés aux moyens de connexion d'entrée pour relier un téléréalisateur au système informatique compatible approprié, automatiquement ou sur requête d'un téléréalisateur.

Les informations graphiques peuvent comporter des textes et/ou des images (dessins, photographies...) et/ou des effets d'affichage et/ou des animations graphiques en deux ou trois dimensions et/ou des séquences vidéo.

L'incorporation de sons aux séquences d'informations graphiques, bien que non nécessaire dans toutes les applications de l'invention, est avantageuse dans la plupart d'entre elles. Dès lors, avantageusement et selon l'invention, le dispositif serveur est caractérisé en ce que le dispositif de diffusion comprend des moyens, dits carte son, aptes à générer au moins un signal de son, et en ce que le dispositif de diffusion est adapté pour incorporer chaque signal de son issu de la carte son dans ledit signal vidéo.

En outre, la transmission des sons en direct simultanément aux images ou autres informations graphiques ou données via les réseaux les plus courants de transmission d'informations numériques tels que le réseau téléphonique commuté utilisé pour accéder au réseau Internet, pose encore des problèmes de débit de transmission et de synchronisation. En conséquence, avantageusement et selon l'invention, le dispositif serveur comprend des moyens d'établissement d'une communication audio -notamment téléphonique-indépendante de sons entre le téléréalisateur connecté et les moyens de raccordement monocanal. Ces moyens comprennent une ligne de transmission indépendante de sons et un dispositif de connexion automatique à cette ligne de transmission indépendante de sons, ce dispositif étant relié aux moyens de raccordement monocanal sur le réseau de télévision.

De la sorte, deux liaisons de communication peuvent être établies simultanément et en parallèle par chaque téléréalisateur avec le dispositif serveur : une pour l'accès à distance aux ressources informatiques du dispositif serveur et la transmission d'informations numériques -notamment des informations graphiques-, et l'autre pour la transmission de sons entre le téléréalisateur et le canal du réseau de télévision (commentaire, musique, ...). La qualité du son est ainsi améliorée, notamment pour les émissions télédiffusées en direct.

Les ressources informatiques et les moyens de connexion d'entrée sont adaptés pour former des moyens informatiques de réalisation aptes à permettre à un téléréalisateur connecté d'accéder à au moins une partie des ressources informatiques et de téléréaliser, à l'aide de ces ressources informatiques, au moins une séquence d'informations.

Avantageusement et selon l'invention, les ressources informatiques comprennent des moyens logiciels aptes à ouvrir (c'est-à-dire charger en mémoire vive) des fichiers représentatifs d'informations graphiques et/ou de sons. De la sorte, un téléréalisateur connecté peut faire ouvrir (c'est-à-dire charger en mémoire vive) par le dispositif serveur un logiciel permettant de mettre en forme et d'afficher des textes et/ou des images et/ou des animations graphiques et/ou des effets d'affichage et/ou des séquences vidéo et/ou des sons, permettant la téléréalisation avec et sur les ressources informatiques du dispositif serveur, des séquences à télédiffuser sur ledit canal du réseau de télévision.

Par ailleurs, avantageusement et selon l'invention, le dispositif serveur comprend des moyens de connexion, dits moyens de connexion en sortie, à au moins un deuxième réseau de transmission d'informations numériques, ces moyens de connexion en sortie étant adaptés, ainsi que les ressources informatiques, pour permettre à un téléréalisateur connecté d'accéder à ce deuxième réseau depuis le dispositif serveur pour y consulter des informations et/ou pour télécharger des informations sur le dispositif serveur, ensuite incorporées dans une séquence d'informations graphiques en cours de réalisation, notamment directement adressées au contrôleur d'écran du dispositif de télédiffusion, et donc télédiffusées telles quelles en tant que partie de la séquence téléréalisée.

Avantageusement et selon l'invention, le deuxième réseau est un réseau compatible IP -notamment le réseau public Internet-, et les ressources informatiques comportent des moyens logiciels de navigation sur ce réseau. Il peut aussi s'agir d'un réseau privé (intranet, extranet...).

Avantageusement et selon l'invention, les moyens de connexion d'entrée et les ressources informatiques sont adaptés pour recevoir des informations numériques représentant des informations graphiques et/ou sons transmises par un téléréalisateur connecté, les ressources informatiques étant adaptées pour permettre l'incorporation de ces informations dans les séquences d'informations réalisées, et donc dans le signal vidéo émis et télédiffusé sur ledit canal. Les séquences d'informations télédiffusées sur le canal de télévision peuvent ainsi être constituées, au moins en partie, par des informations transmises par un téléréalisateur au dispositif serveur via ledit premier réseau.

Ainsi, avantageusement et selon l'invention, le dispositif serveur comprend des moyens logiciels adaptés pour recevoir des séquences d'informations audio et/ou vidéo via le premier réseau et pour permettre à un téléréalisateur connecté d'adresser, en direct ou en différé, à l'aide desdites ressources informatiques, ces séquences au contrôleur d'écran et/ou à la carte son d'au moins un. dispositif de télédiffusion du dispositif serveur en vue de leur incorporation au signal vidéo émis et télédiffusé sur ledit canal.

De la sorte, un téléréalisateur connecté peut réaliser les séquences d'informations graphiques à partir d'informations mémorisées sur une mémoire de masse des ressources informatiques du dispositif serveur lui-même ; et/ou d'informations transmises par le téléréalisateur connecté aux ressources informatiques du dispositif serveur via ledit premier réseau ; et/ou d'informations consultées et/ou téléchargées via au moins un deuxième réseau (tels que des contenus (textes, images, sons, vidéo...) de sites Internet ou des courriers électroniques ou des fichiers télétransmis (protocole FTP)) à partir des ressources informatiques du dispositif serveur, lui-même contrôlé à distance par le téléréalisateur connecté via le premier réseau. Il est à noter que les deux dernières sources d'informations peuvent se combiner dans la mesure où les informations obtenues via le deuxième réseau peuvent être issues d'un poste du même téléréalisateur connecté, notamment d'un poste informatique utilisé par le téléréalisateur connecté pour la communication via le premier réseau. Le premier réseau et le deuxième réseau peuvent aussi être les mêmes (notamment le réseau Internet).

Ainsi, les séquences d'informations peuvent être réalisées par un téléréalisateur connecté à l'aide des ressources informatiques à partir de trois sources d'informations distinctes : des informations mémorisées dans le dispositif serveur et/ou des informations transmises au dispositif serveur via le premier réseau et/ou des informations obtenues via le deuxième réseau à partir du dispositif serveur, lui-même contrôlé à distance par le téléréalisateur connecté via le premier réseau.

Selon une autre variante (qui peut être combinée avec la précédente), les séquences d'informations graphiques peuvent être entièrement réalisées par un téléréalisateur à partir de ses propres moyens informatiques (et non à l'aide des ressources informatiques du dispositif serveur), puis transmises au dispositif serveur via les moyens de connexion d'entrée.

En outre, avantageusement et selon l'invention, dans une première variante, les moyens de connexion d'entrée et les ressources informatiques sont adaptés pour autoriser, à chaque instant, l'établissement d'une communication avec un et un seul téléréalisateur distant quelconque, qui est seul à accéder aux ressources informatiques et à pouvoir réaliser une séquence d'informations graphiques. De la sorte, le dispositif serveur n'est pas accessible par un téléréalisateur si un autre téléréalisateur est déjà connecté. Les ressources informatiques peuvent être adaptées pour limiter le temps de connexion de chaque téléréalisateur, et/ou le temps résiduel de connexion d'un téléréalisateur connecté à partir du moment où un autre téléréalisateur tente de se connecter, ce qui peut être détecté par les moyens de connexion d'entrée. De façon plus générale, les moyens de connexion d'entrée et les ressources informatiques peuvent être adaptées pour limiter les dates et/ou heures et/ou durées de connexion de certains téléréalisateurs ou groupes de téléréalisateurs.

Dans une autre variante, les moyens de connexion d'entrée et les ressources informatiques sont adaptés pour autoriser, à chaque instant, l'établissement d'une communication avec plusieurs téléréalisateurs distants quelconques différents. Dans une première sous-variante selon l'invention, les ressources informatiques sont adaptées pour permettre l'accès à ces ressources informatiques, à chaque instant, par un et un seul téléréalisateur connecté. Les autres téléréalisateurs connectés peuvent alors être mis en attente. Là encore, la durée d'accès de chaque téléréalisateur connecté aux ressources informatiques peut être limitée à une valeur prédéterminée absolue constante, et/ou la durée résiduelle d'accès d'un téléréalisateur connecté peut être limitée à partir du moment où un deuxième téléréalisateur se connecte.

Les ressources informatiques peuvent être adaptées pour que la durée résiduelle d'accès aux ressources informatiques soit communiquée au téléréalisateur connecté en cours d'accès, et que la durée d'attente soit communiquée à chaque autre téléréalisateur connecté.

La première variante et la première sous-variante décrites ci-dessus sont en particulier avantageuses dans le cas où les émissions réalisées par le téléréalisateur connecté sont émises en temps réel, au fur et à mesure de leur réalisation, c'est-à-dire en direct ou en léger différé, par un seul dispositif de télédiffusion sur un même réseau de télévision.

Ainsi, avantageusement et selon l'invention, les ressources informatiques, les moyens de connexion d'entrée, les moyens de capture et de conversion automatique, et les moyens de raccordement sont adaptés pour pouvoir émettre le signal vidéo en direct sur le réseau de télévision.

Dans une deuxième sous-variante selon l'invention, les ressources informatiques sont adaptées pour pouvoir être partagées, à chaque instant, par plusieurs téléréalisateurs connectés.

Néanmoins, chaque dispositif de diffusion ne peut recevoir qu'une séquence d'informations formant une émission, et ne télédiffuser qu'un seul signal vidéo sur un canal. Pour cette raison, la version la plus simple de l'invention correspondant à la première variante mentionnée ci-dessus est en général suffisante. Il est à noter néanmoins qu'un téléréalisateur connecté peut aussi, grâce aux moyens de connexion en sortie, incorporer des informations issues d'autres téléréalisateurs aux séquences qu'il téléréalise formant l'émission télédiffusée. Par exemple, un téléréalisateur connecté peut se connecter à une visioconférence en cours sur un réseau numérique (par exemple Internet), et choisir d'adresser les informations constituant cette visioconférence au dispositif de télédiffusion en tant qu'émission sur le réseau de télévision. L'invention permet alors la diffusion télévisuelle de visioconférences à faible coût.

Avantageusement et selon l'invention, les ressources informatiques comprennent aussi des moyens de mémorisation des séquences d'informations graphiques réalisées par un téléréalisateur connecté, et des moyens de programmation par le téléréalisateur connecté de la télédiffusion de ces séquences d'informations graphiques en différé sur le réseau de télévision. Cette mémorisation est en particulier avantageuse avec la deuxième sous-variante pour la télédiffusion successive des séquences réalisées par différents téléréalisateurs.

Les moyens de connexion d'entrée peuvent être du type à accès totalement libre par tout téléréalisateur disposant des moyens et informations, qui peuvent être publiques, permettant l'établissement de la connexion. Néanmoins, de préférence, avantageusement et selon l'invention, les moyens de connexion d'entrée sont du type à code d'autorisation d'accès. Le code d'autorisation d'accès peut être collectif, c'est-à-dire commun à tous les téléréalisateurs du groupe autorisé à accéder au dispositif serveur. De préférence, les moyens de connexion d'entrée comportent des moyens d'identification de chaque téléréalisateur connecté, et les ressources informatiques sont adaptées pour mémoriser l'identification de chaque téléréalisateur connecté et l'associer à chaque séquence d'informations graphiques qu'il téléréalise. De la sorte, on minimise les risques de télédiffusion d'émissions prohibées sur le réseau de télévision, puisque l'auteur de telles émissions peut être identifié.

Par ailleurs, avantageusement et selon l'invention, les ressources informatiques sont adaptées pour délivrer automatiquement un écran de veille par défaut au contrôleur d'écran, en l'absence de séquence d'informations graphiques à émettre réalisée par un téléréalisateur. De la sorte, l'absence de téléréalisateur connecté est immédiatement constatée par les téléspectateurs dudit canal de réseau de télévision. De même, un son de veille peut être diffusé avec l'écran de veille. Ce son de veille peut être un programme musical, un programme d'informations, une chaîne de radio....

En variante, les ressources informatiques peuvent être adaptées pour télédiffuser par défaut des émissions d'une chaîne accessible par le deuxième réseau, notamment une chaîne de télévision par Internet, c'est-à-dire émise à partir d'un site Internet.

Avantageusement et selon l'invention, les moyens de raccordement sont choisis parmi des moyens de raccordement à un réseau de télévision câblé, des moyens de raccordement à un réseau hertzien de télévision, des moyens de raccordement à un réseau de télévision numérique par satellite. Le choix du réseau de télévision ne dépend que du public de téléspectateurs ciblé qui peut être localisé ou non, restreint à un groupe de personnes ou non. En particulier, avantageusement et selon l'invention, les moyens de connexion d'entrée comprennent des moyens pour établir une communication selon au moins un protocole standard -notamment H320 ou H323- permettant la télédiffusion de visioconférences par le dispositif serveur.

Avantageusement, un dispositif serveur selon l'invention se présente sous la forme d'un boîtier renfermant une architecture d'unité centrale de micro-ordinateur. Il ne comprend pas nécessairement les périphériques traditionnels d'interface homme (écran, clavier, pointeur...) mais incorpore les cartes et logiciels gestionnaires de tels périphériques pour permettre son télécontrôle par un téléréalisateur connecté. Il comprend en outre les moyens de conversion automatique générant le signal vidéo de télévision.

Dans ce cas, un même micro-ordinateur peut faire office de dispositif de télédiffusion et de ressources informatiques, et incorporer les moyens de connexion d'entrée et de sortie et/ou être associés à ces moyens de connexion (périphériques externes). Dans la variante la plus simple de l'invention, le dispositif serveur est essentiellement un dispositif de télédiffusion accessible en libre-service grâce aux moyens de connexion d'entrée, et émet automatiquement sur ledit canal de réseau de télévision selon un mode de programmation prédéterminé, par exemple dans l'ordre successif de leur réception, les séquences d'informations graphiques adressées par les téléréalisateurs (ces séquences étant réalisées par chaque téléréalisateur de façon autonome et indépendante).

. En variante, le dispositif de télédiffusion monocanal peut être fait d'une machine (micro-ordinateur par exemple) distincte des ressources informatiques et des moyens de connexion d'entrée qui peuvent être formés d'une autre machine (autre micro-ordinateur par exemple) reliée au dispositif de télédiffusion par un réseau (qui peut être un réseau public tel qu'Internet). Les différentes machines peuvent être situées sur un même site ou au contraire sur des sites différents. Les ressources informatiques transmettent alors au dispositif de diffusion les séquences d'information formant les émissions à télédiffuser (télédiffusées par le(les) téléréalisateurs).. Cette transmission peut être automatique ou déclenchée et réalisée sous le contrôle de chaque téléréalisateur.

Avantageusement et selon l'invention, le dispositif de télédiffusion adresse les séquences d'informations graphiques à son contrôleur d'écran de façon automatique, par exemple dans l'ordre successif dans lequel il reçoit les séquences d'informations téléréalisées par les différents téléréalisateurs, en direct ou en différé. En variante, le dispositif de diffusion peut incorporer un logiciel permettant la programmation par chaque téléréalisateur des différentes émissions à télédiffuser. Ce logiciel peut être paramétré pour limiter les possibilités de dates et/ou heures de télédiffusion et/ou les durées de télédiffusion pour des téléréalisateurs ou groupes de téléréalisateurs prédéterminés et/ou pour accorder différents niveaux de priorité de télédiffusion à certains téléréalisateurs ou groupes de téléréalisateurs.

L'invention s'étend à un réseau de télévision analogique ou numérique, câblé ou hertzien ou par satellite, caractérisé en ce qu'il comprend au moins un dispositif serveur de téléréalisation multi-téléréalisateur en libre-service et de télédiffusion automatique d'émissions sur un canal de ce réseau de télévision. Grâce à l'invention, tout téléréalisateur autorisé (pouvant ou non aussi être un téléspectateur accédant au réseau de télévision), disposant d'un poste informatique, peut téléréaliser et télédiffuser des émissions de son choix sur le canal du réseau de télévision, grâce au dispositif serveur. Aucun producteur centralisé n'est nécessaire pour contrôler les émissions téléréalisées et télédiffusées sous forme collégiale et mutualiste, sous la responsabilité de chaque téléréalisateur connecté.

L'invention s'étend aussi à un dispositif serveur et à un réseau de télévision caractérisés en combinaison par tout ou partie des caractéristiques mentionnées ci-dessus ou ci-après.

L'invention peut faire l'objet de très nombreuses applications, et notamment pour réaliser :
- un canal de télédiffusion de visioconférences,
- un canal de télévision locale (régionale, municipale, ou au niveau d'un lotissement, d'un immeuble ou d'une entreprise),
- un canal de télévision destiné à des communautés étroites et ciblées (professionnelles, thématiques, corporatives; commerciales, associatives, sportives, ludiques, linguistiques, culturelles, éducatives, ...).

D'autres buts, caractéristiques et avantages de l'invention apparaissent à la lecture de la description suivante qui se réfère aux figures annexées dans lesquelles :
- la figure 1 est un schéma d'un exemple de réseau de télévision selon l'invention,
- la figure 2 est un exemple de téléréalisation matérielle d'un dispositif serveur selon l'invention.

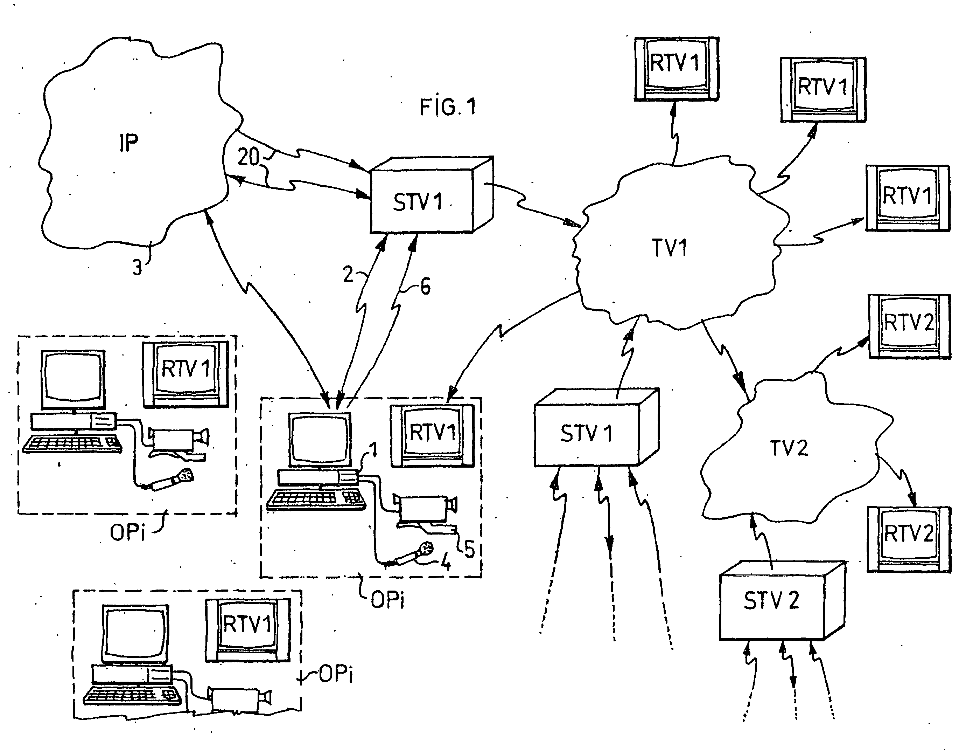

Sur la figure 1, on a représenté un réseau de télévision selon l'invention, qui comprend un réseau principal TV1 qui peut être un réseau de transmission d'émissions de télévision par câble et/ou par faisceau hertzien et/ou par satellite et diffuse donc des émissions en direction de différents récepteurs (téléspectateurs) de télévision RTV1, et, le cas échéant, vers au moins un réseau de télévision secondaire TV2 qui peut être un réseau de diffusion d'émissions de télévision par câble et/ou par faisceau hertzien et/ou par satellite qui, lui-même, diffuse les émissions vers différents autres récepteurs (téléspectateurs) de télévision RTV2. De multiples réseaux de télévision en parallèle ou en cascade peuvent ainsi être prévus.

Les récepteurs téléspectateurs RTV1, RTV2 sont des récepteurs de télévision traditionnels qui peuvent être captifs (c'est-à-dire ne présentant pas de fonctionnalité d'interactivité).

Le réseau de télévision principal TV1 comprend en particulier sur au moins un canal, un signal vidéo de télévision issu d'au moins un dispositif serveur STV1 selon l'invention. Dans l'exemple représenté, deux dispositifs serveurs STV1 sont illustrés, chaque dispositif serveur délivrant un signal vidéo de télévision sur un canal du réseau de télévision principal TV1. De même, au moins un dispositif serveur selon l'invention STV2 peut émettre un signal vidéo directement sur un canal du réseau de télévision secondaire TV2, c'est-à-dire sans passer par le réseau de télévision principal TV1.

Un tel canal géré par un dispositif serveur STV1, STV2 selon l'invention peut être de type public (reçu par tout téléspectateur situé dans la zone de couverture du canal, doté d'un récepteur apte à le recevoir) ou privé, par abonnement, crypté ou non. Les émissions présentes sur le canal sont émises et télédiffusées simultanément collectivement à destination de tous les téléspectateurs RTV1, RTV2 aptes et autorisés à recevoir ce canal.

Chaque dispositif serveur STV1, STV2 peut être accédé en libre-service par au moins un téléréalisateur OPi appartenant à un groupe de téléréalisateurs OPi aptes et autorisés à établir une communication avec le dispositif serveur STV1, STV2. Le nombre de téléréalisateurs OPi appartenant au groupe de téléréalisateurs aptes et autorisés à établir une communication avec le dispositif serveur STV1, STV2, peut être prédéterminé et limité, ou variable et illimité, par exemple selon les autorisations de connexion délivrées ou en fonction de la connaissance que les différents téléréalisateurs potentiels peuvent avoir de l'existence des dispositifs serveurs.

Les différents téléréalisateurs OPi d'un même groupe de téléréalisateurs peuvent être géographiquement proches les uns des autres ou, au contraire, répartis de façon quelconque, par exemple sur toute la surface d'une région, d'un Etat, d'un continent ou de la Terre, selon la couverture géographique du(des) réseau(x) de télévision TV1, TV2.

Chaque téléréalisateur comporte un poste informatique 1 (unité centrale, clavier, écran,...) adapté pour pouvoir établir une communication directe par l'intermédiaire d'une ligne de transmission 2 d'un réseau de transmission d'informations numériques, avec un dispositif serveur STV1, STV2 selon l'invention. Cette ligne de transmission 2 peut être une ligne d'un réseau public ou privé, spécialisée ou non, et adaptée pour permettre l'échange d'informations numériques selon un protocole quelconque prédéterminé entre le téléréalisateur OPi et le dispositif serveur STV1, STV2. De préférence, la ligne de transmission directe 2 est de type compatible avec les protocoles IP. A titre d'exemple, on peut citer une ligne de réseau Ethernet, une ligne de réseau téléphonique commuté, une ligne de réseau numérique à intégration de service, .... Grâce à cette ligne de transmission 2, le téléréalisateur OPi peut demander et obtenir une communication avec un dispositif serveur STV1, STV2 en vue de lui transmettre des informations numériques et de permettre le télécontrôle du dispositif serveur STV1, STV2 par le téléréalisateur OPi ainsi connecté via la ligne de transmission 2.

En variante ou en combinaison, à la place de la ligne de transmission 2, le téléréalisateur OPi peut être simplement adapté pour établir une connexion via le réseau Internet 3 avec un dispositif serveur STV1, STV2 selon l'invention.

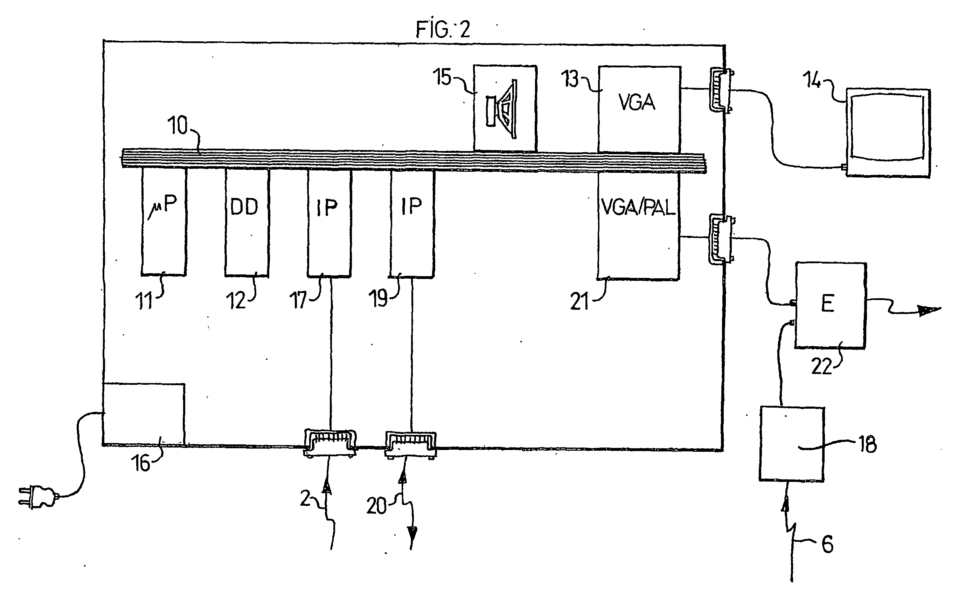

Un exemple de dispositif serveur selon l'invention est représenté figure 2. Ce dispositif présente une architecture d'unité centrale de micro-ordinateur comprenant un bus 10, une carte mère 11 à microprocesseur(s), avec ses différents composants mémoires vives et mortes associés, une mémoire de masse sous forme par exemple d'un disque dur 12, un contrôleur d'écran 13 apte à contrôler au moins un dispositif d'affichage tel qu'un écran 14, une carte son 15, une alimentation électrique 16. Une carte 17 de connexion d'entrée permet de relier le dispositif serveur à la ligne de transmission 2 directe. Cette carte 17 peut être une simple carte modem traditionnelle dans le cas où le premier réseau de transmission formé par cette ligne 2 est le réseau téléphonique commuté. Toute autre carte réseau appropriée peut être utilisée.

En outre, le dispositif.serveur comprend une troisième carte 19, dite carte de connexion en sortie, pour la connexion au réseau Internet par une ligne spécialisée ou une ligne téléphonique standard 20.

Le dispositif comprend aussi au moins une carte 21 de capture et de conversion automatique des informations graphiques adressées à la carte contrôleur d'écran 13 et traitées par elle et des sons adressés à la carte son 15 et traités par elle. Cette carte 21 est adaptée pour générer un signal vidéo compatible avec le réseau de télévision TV1, TV2. Elle fournit automatiquement et sans délai ce signal vidéo à au moins un émetteur 22 adapté pour émettre automatiquement et sans délai le signal sur un canal du réseau TV1, TV2 correspondant. La carte 21 fournit le signal vidéo selon le standard de télévision du réseau TV1, TV2 (PAL, SECAM, ....).

A titre de moyens de capture et de conversion automatique 21, on peut utiliser par exemple un boîtier IN 1700 VGA/MAC (INLENE, USA).

Grâce à un tel boîtier, toutes les séquences adressées au contrôleur d'écran 13 et à la carte son 15 (qui sont téléréalisées en direct par un téléréalisateur OPi connecté, ou en différé par un ou plusieurs téléréalisateur(s) qui les a préalablement téléréalisées et mémorisées sur la mémoire de masse 12 du dispositif serveur) sont automatiquement et instantanément émises sur le canal vidéo de sortie géré par ce boîtier 21, relié à l'émetteur 22 pour former le canal sur lequel ces séquences sont donc automatiquement diffusées, simultanément et collectivement à destination des téléspectateurs RTV1, RTV2.

Le dispositif serveur représenté figure 2 se présente sous la forme d'un boîtier clos doté de ses connexions extérieures avec les lignes 2, 20, 6 et avcc l'émetteur 22. Bien entendu; chaque carte de connexion 17, 18, 19 peut se présenter sous la forme d'un dispositif externe, et non d'une carte interne connectée directement sur le bus 10.

Chaque émetteur 22 est adapté au réseau de télévision. Dans le cas d'un réseau de télévision numérique par satellite, l'émetteur 22 comprend par exemple un encodeur Mpeg2 EZCast® commercialisé par PHILIPS et un multiplexeur Silver Skygate® commercialisé par la société Thomcast Multimedia And Digital Systems Unit (CESSON-SEVIGNE, FRANCE).

Selon les cas, l'émetteur 22 peut être externe au boîtier du dispositif serveur comme représenté ou, en variante, être incorporé dans le boîtier du dispositif serveur.

Le dispositif serveur est donc un dispositif informatique qui comprend un logiciel de système d'exploitation, -de préférence adapté et compatible avec les réseaux de transmission d'informations numériques (par exemple WINDOWS NT®, LINUX®, UNIA®...).

Le dispositif serveur comprend également un logiciel gérant les fonctionnalités de ces réseaux et la connexion des différents téléréalisateurs. En particulier, ce logiciel de gestion de réseaux incorpore avantageusement un module permettant la gestion de codes d'autorisation d'accès individuels ou collectifs et/ou l'identification de chaque téléréalisateur connecté. Par exemple, la connexion des téléréalisateurs peut s'effectuer par l'intermédiaire de la saisie d'un code d'autorisation (LOGIN) et d'un mot de passe individuel. Il peut également être prévu tout autre moyen d'identification et/ou d'authentification particulier (signature électronique, carte d'authentification personnalisée...). Le logiciel de gestion de réseaux permet aussi le télécontrôle du dispositif serveur par tout téléréalisateur connecté. A titre d'exemple, on peut utiliser le logiciel Microsoft NET MEETING®.

Le dispositif serveur inclut également au moins un logiciel de navigation sur le réseau Internet permettant l'accès à ce réseau Internet à partir du dispositif serveur lui-même, par exemple Microsoft Explorer®, Netscape®....

Par ailleurs, avantageusement, le téléréalisateur comprend au moins une caméra vidéo 4 et au moins un microphone 5 relié au poste informatique 1. La transmission simultanée d'images et de sons via une ligne de transmission 2 ou via le réseau Internet est ainsi possible.

Si l'on veut néanmoins améliorer la qualité du son, notamment pour une diffusion en direct, on peut prévoir une ligne 6 de transmission indépendante de sons -notamment une ligne 6 du réseau téléphonique commuté-. Le dispositif serveur STV1, STV2 comporte alors un dispositif 18 de connexion automatique à cette ligne 6 de transmission indépendante de sons, ce dispositif 18 permettant la réception automatique des sons de la ligne 6 et la transmission automatique de ces sons sur l'émetteur 22 du canal du réseau de télévision. A titre d'exemple d'un tel dispositif, on peut citer l'équipement SCOOP REPORTER II® commercialisé par la société AETA, CLAMART, FRANCE. Cet équipement comprend une entrée de connexion d'une ligne téléphonique 6 indépendante, et diverses sorties audio, dont par exemple une sortie au format Mpeg pouvant être reliée à une entrée audio d'un encodeur Mpeg2 servant d'émetteur 22 sur le canal de télévision. Ainsi, le téléréalisateur connecté peut par exemple commenter en direct avec une excellente qualité audio, via la ligne 6 de transmission indépendante de sons, les informations diffusées sur le canal de télévision. La ligne de transmission indépendante de sons 6 est ainsi simplement une ligne du réseau téléphonique commuté.

En variante non représentée, une table de mixage ou de commutation peut aussi être interposée entre d'un côté la carte son 15 du dispositif serveur STV1, STV2 et ledit dispositif 18 dé connexion automatique, et, d'autre part l'émetteur 22, de sorte que les sons diffusés peuvent parvenir soit de la carte son 15, soit dudit dispositif 18, soit des deux.

Par ailleurs, chaque téléréalisateur OPi peut être lui-même téléspectateur, c'est-à-dire comprendre au moins un récepteur de télévision RTV1 et/ou RTV2, de façon à capter les images issues de l'un et/ou de l'autre des réseaux de télévision TV1, TV2.

Un tel récepteur de télévision est avantageusement prévu dans le cas où les téléréalisateurs peuvent télédiffuser des émissions en direct. Ainsi, dans un réseau selon l'invention, chaque téléréalisateur OPi peut être téléspectateur et, réciproquement, chaque téléspectateur qui dispose d'un poste informatique 1 et des moyens de connexion peut être un téléréalisateur OPi. Néanmoins, il est à noter que les émissions télédiffusées sur le canal peuvent être et sont en général reçues à l'identique collectivement et simultanément par tous les téléspectateurs.

Par ailleurs, différents logiciels de mise en forme et/ou affichage et/ou utilisation d'informations graphiques quelconques peuvent être chargés sur le dispositif serveur, de façon à permettre la mise en forme et la téléréalisation et la combinaison de séquences d'informations graphiques et/ou sonores. A ce titre, tous les logiciels et progiciels du commerce peuvent être envisagés et notamment les traitements de texte, tableurs, éditeurs d'images écran (par exemple MICROSOFT POWERPOINT®), progiciels de dessin, progiciels de gestion de photographies, gestionnaires de séquences vidéo...).

Le dispositif serveur peut aussi comprendre au moins un logiciel de réception d'informations graphiques et/ou de sons, notamment d'une chaîne de télévision, par le réseau Internet, par exemple le logiciel Real Player 7®. De la sorte, des séquences issues d'une chaîne de télévision émise depuis un site Internet peuvent former ou être incorporées dans les séquences réalisées par un téléréalisateur.

Pour faciliter la téléréalisation des séquences, le dispositif serveur comprend avantageusement au moins un logiciel de production de séquences vidéo, par exemple le logiciel Real Producer Pro® qui permet aussi l'affichage de ces séquences, c'est-à-dire leur adressage au contrôleur d'écran 13. Ce logiciel permet aussi la mémorisation des émissions sur le disque dur 12 et la programmation des émissions en différé.

D'autres logiciels semblables peuvent être utilisés, par exemple le logiciel IFINISH®.

L'invention peut faire l'objet de très nombreuses variantes de réalisation par rapport au mode de réalisation précédemment décrit.

En particulier, dans l'exemple mentionné ci-dessus, chaque dispositif serveur STV1, STV2 constitue simultanément un dispositif de télédiffusion et les ressources informatiques et moyens de connexion. Ces différentes fonctions peuvent néanmoins être séparées sur des machines distinctes, proches ou éloignées, reliées par réseau. Dans ce cas, lesdites ressources informatiques peuvent être adaptées pour se connecter automatiquement à un dispositif de télédiffusion. Lesdites ressources informatiques peuvent être formées au moins pour partie d'un site Internet et/ou d'un poste téléréalisateur. Plusieurs machines peuvent être prévues, voire même un réseau de machines, en tant que ressources informatiques pour la téléréalisation des séquences d'informations par les téléréalisateurs. De même, les moyens de connexion d'entrée peuvent être multipliés pour permettre la connexion simultanée de plusieurs téléréalisateurs.

L'invention permet de réaliser des chaînes de télévision locales ou non, chaque téléspectateur pouvant visualiser des informations téléréalisées par un téléréalisateur quelconque. Ces informations peuvent être d'une très grande diversité puisqu'elles peuvent être issues à la fois du réseau Internet, d'informations spécialisées issues d'un téléréalisateur, ou même d'informations standards préalablement enregistrées sur un dispositif serveur (base de données par exemple).

L'ensemble de ces fonctionnalités est obtenu à un coût extrêmement faible, puisque chaque téléréalisateur peut téléréaliser ses émissions pour un coût correspondant uniquement à la liaison avec le dispositif serveur. L'invention permet par exemple la télédiffusion de visioconférences par télévision, un téléréalisateur connecté au dispositif serveur pouvant en commander la connexion à un réseau sur lequel une visioconférence est diffusée, l'ensemble des images et des sons de la visioconférence étant télédiffusé et reçu simultanément et collectivement par les différents téléspectateurs aptes et autorisés à recevoir le canal de télévision. Elle permet dans le même sens de réaliser des opérations de téléenseignement, télémédecine... par télévision, ou des chaînes de télévision locales. Le fait que différentes informations accessibles sur le réseau Internet (pages de sites Internet...) peuvent être télédiffusées auprès des téléspectateurs, les incitent à utiliser le réseau Internet et les familiarise avec ce réseau.

## Revendications

1. Dispositif serveur de téléréalisation multi-réalisateur en libre-service et de télédiffusion automatique d'émissions sur un canal d'au moins un réseau de télévision (TV1, TV2) à destination de chaque téléspectateur (RTV1, RTV2) apte et autorisé à recevoir ce canal, ce dispositif serveur comprenant :
- au moins un dispositif informatique, dit dispositif de télédiffusion (STV1, STV2), comportant :
. un contrôleur d'écran (13),
. des moyens (21) de capture et de conversion automatique des séquences d'informations graphiques adressées au contrôleur d'écran (13) et traitées par le contrôleur d'écran (13), adaptés pour générer au moins un signal vidéo qui représente ces séquences d'informations graphiques, et qui est compatible avec au moins un réseau de télévision (TV1, TV2),
. des moyens (22) de raccordement monocanal sur un réseau de télévision (TV1, TV2) adaptés pour émettre, sur ledit canal, un tel signal vidéo issu des moyens (21) de capture et de conversion automatique,
- des ressources informatiques (10, 11, 12) et des moyens de connexion, dits moyens de connexion d'entrée (17), à au moins un premier réseau de transmission (2, 3) d'informations numériques, les ressources informatiques (10, 11, 12) et les moyens de connexion d'entrée étant adaptés pour :
. autoriser l'établissement d'une communication avec au moins un téléréalisateur (OPi) distant quelconque, dit téléréalisateur connecté, appartenant à un groupe de téléréalisateurs aptes et autorisés à établir une communication avec les ressources informatiques (10, 11, 12) via au moins un tel premier réseau (2, 3), en permettant à ce téléréalisateur connecté d'accéder à distance via le premier réseau (2, 3) aux ressources informatiques,
. former des moyens informatiques de réalisation aptes à permettre à tout téléréalisateur (OPi) connecté d'accéder à au moins une partie des ressources informatiques (10, 11, 12) et de téléréaliser, à l'aide de ces ressources informatiques dont il a le contrôle à distance via les moyens de connexion d'entrée (17), au moins une séquence d'informations graphiques apte à être transmise à un contrôleur d'écran (13),
. transmettre au contrôleur d'écran (13) d'au moins un dispositif de télédiffusion (STV1, STV2), au moins une séquence d'informations graphiques téléréalisée par au moins un téléréalisateur, de sorte que cette séquence est télédiffusée sur le canal du réseau de télévision.

2. Dispositif selon la revendication 1, **caractérisé en ce qu'**il comprend des moyens logiciels de gestion de réseaux permettant le télécontrôle du dispositif serveur par tout téléréalisateur connecté.

3. Dispositif selon l'une des revendications 1 ou 2, **caractérisé en ce que** les moyens (17) de connexion d'entrée et les ressources informatiques (10, 11, 12) sont adaptés pour autoriser, à chaque instant, l'établissement d'une communication avec un et un seul téléréalisateur (OPi) distant quelconque, qui est seul à accéder aux ressources informatiques (10, 11, 12) et à pouvoir téléréaliser une séquence d'informations graphiques.

4. Dispositif selon l'une des revendications 1 ou 2, **caractérisé en ce que** les moyens (17) de connexion d'entrée et les ressources informatiques (10, 11, 12) sont- adaptés pour autoriser, à chaque instant, l'établissement d'une communication avec plusieurs téléréalisateurs (OPi) distants quelconques différents.

5. Dispositif selon la revendication 4, **caractérisé en ce que** les ressources informatiques (10, 11, 12) sont adaptées pour permettre l'accès à ces ressources informatiques (10, 11, 12) à chaque instant à un et un seul téléréalisateur (OPi) connecté.

6. Dispositif selon la revendication 5, **caractérisé en ce que** les ressources informatiques (10, 11, 12) sont adaptées pour pouvoir être partagées, à chaque instant, par plusieurs téléréalisateurs (OPi) connectés.

7. Dispositif selon l'une des revendications 1 à 6, **caractérisé en ce que** les ressources informatiques (10, 11, 12), les moyens (21) de capture et de conversion automatique, et les moyens (22) de raccordement sont adaptés pour pouvoir émettre le signal vidéo en direct.

8. Dispositif selon l'une des revendications 1 à 7, **caractérisé en ce que** les ressources informatiques (10, 11, 12) comprennent des moyens (12) de mémorisation des séquences d'informations graphiques téléréalisées par au moins un téléréalisateur (OPi), et des moyens (11) de programmation de la télédiffusion de ces séquences d'informations graphiques en différé.

9. Dispositif selon l'une des revendications 1 à 8, **caractérisé en ce que** les moyens (17) de connexion d'entrée sont du type à code d'autorisation d'accès.

10. Dispositif selon l'une des revendications 1 à 9, **caractérisé en ce que** les moyens (17) de connexion d'entrée comportent des moyens d'identification de chaque téléréalisateur (OPi) connecté, et les ressources informatiques (10, 11, 12) sont adaptées pour mémoriser l'identification de chaque téléréalisation (OPi) connecté et l'associer à chaque séquence d'informations graphiques qu'il téléréalise.

11. Dispositif selon l'une des revendications 1 à 10, **caractérisé en ce que** le premier réseau (3) est un réseau compatible IP.

12. Dispositif selon l'une des revendications 1 à 11, **caractérisé en ce que** le dispositif de télédiffusion comprend des moyens, dits carte son (15), aptes à générer au moins un signal de son, et **en ce que** le dispositif de télédiffusion est adapté pour incorporer chaque signal de son issu de la carte son (15) dans le signal vidéo.

13. Dispositif selon l'une des revendications 1 à 12, **caractérisé en ce qu'**il comprend des moyens (6, 18) d'établissement d'une communication audio -notamment téléphonique- indépendante entre le téléréalisateur connecté (OPi) et les moyens (22) de raccordement monocanal.

14. Dispositif selon l'une des revendications 1 à 13, **caractérisé en ce que** les moyens (17) de connexion d'entrée comprennent des moyens pour recevoir des informations numériques représentant des informations graphiques et/ou sons transmises par un téléréalisateur connecté (OPi), les ressources informatiques (10, 11, 12) étant adaptées pour permettre l'incorporation de ces informations dans les séquences d'informations téléréalisées, et donc dans le signal vidéo émis et télédiffusé sur ledit canal.

15. Dispositif selon l'une des revendications 1 à 14, **caractérisé en ce qu'**il comprend des moyens logiciels adaptés pour recevoir des séquences d'informations audio et/ou vidéo via le premier réseau (2, 3) et pour permettre à un téléréalisateur connecté (OPi) d'adresser ces séquences à au moins un contrôleur d'écran (13) et/ou à la carte son (15) d'au moins un dispositif de télédiffusion en vue de leur incorporation au signal vidéo émis et télédiffusé sur ledit canal.

16. Dispositif selon l'une des revendications 1 à 15, **caractérisé en ce que** les ressources informatiques (10, 11, 12) comprennent des moyens logiciels aptes à ouvrir des fichiers représentatifs d'informations graphiques et/ou de sons, un téléréalisateur connecté pouvant faire ouvrir par le dispositif serveur un logiciel permettant de mettre en forme et d'afficher des textes et/ou des images et/ou des animations graphiques et/ou des effets d'affichage et/ou des séquences vidéo et/ou des sons, permettant la téléréalisation avec et sur les ressources informatiques du dispositif serveur, des séquences à télédiffuser sur ledit canal.

17. Dispositif selon l'une des revendications 1 à 16, **caractérisé en ce qu'**il comprend des moyens de connexion, dits moyens (19) de connexion en sortie, à au moins un deuxième réseau (3) de transmission d'informations numériques, adaptés, ainsi que les ressources informatiques (10, 11, 12) pour permettre à un téléréalisateur connecté (OPi) d'accéder à ce deuxième réseau (3) depuis le dispositif serveur pour y consulter des informations et/ou pour télécharger des informations sur le dispositif serveur, ensuite adressées à au moins un contrôleur d'écran (13) d'au moins un dispositif de télédiffusion.

18. Dispositif selon l'une des revendications 1 à 17, **caractérisé en ce que** le deuxième réseau (3) est un réseau compatible IP et **en ce que** les ressources informatiques (10, 11, 12) comportent des moyens logiciels de navigation sur ce réseau.

19. Dispositif selon l'une des revendications 1 à 18, **caractérisé en ce que** les moyens (17) de connexion d'entrée comprennent des moyens pour établir une communication selon au moins un protocole standard -notamment H320 ou H323- permettant la transmission de visioconférences par le dispositif serveur.

20. Dispositif selon l'une des revendications 1 à 19, **caractérisé en ce que** les moyens de raccordement sont choisis parmi des moyens de raccordement à un réseau de télévision câblé, des moyens de raccordement à un réseau hertzien de télévision, des moyens de raccordement à un réseau de télévision numérique par satellite.

21. Dispositif selon l'une des revendications 1 à 20, **caractérisé en ce qu'**il se présente sous la forme d'un boîtier renfermant une architecture d'unité centrale de micro-ordinateur.

22. Réseau de télévision **caractérisé en ce qu'**il comprend au moins un dispositif serveur selon l'une des revendications 1 à 21.

## Claims

1. Server device for self-service multiple-producer remote production and automatic remote broadcasting of programs on one channel of at least one television network (TV1, TV2) which is intended for every television viewer (RTV1, RTV2) who is capable of and authorized for receiving this channel, this server device comprising:
- at least one IT device, called the remote broadcasting device (STV1, STV2), comprising:
. a screen controller (13),
. means (21) for automatic capture and conversion of graphic information sequences which are addressed to and processed by the screen controller (13), and are adapted to generate at least one video signal which represents these graphic information sequences and which is compatible with at least one television network (TV1, TV2),
. means (22) for single-channel connection to a television network (TV1, TV2) which are adapted to transmit, on the said channel, such a video signal which is output by the automatic capture and conversion means (21),
- IT resources (10, 11, 12) and means, called input connection means (17), for connection to at least one first digital information transmission network (2, 3), the IT resources (10, 11, 12) and input connection means being adapted to:
. authorize the establishment of communication with at least one arbitrary distant remote producer (OPi), called the connected remote producer, who belongs to a group of remote producers who are capable of and authorized for establishing communication with the IT resources (10, 11, 12) via at least one such first network (2, 3), enabling this connected remote producer to access the IT resources remotely via the first network (2, 3),
. form IT production means which can enable any connected remote producer (OPi) to access at least part of the IT resources (10, 11, 12), and to remotely produce, using these IT resources which he or she controls remotely via the input connection means (17), at least one sequence of graphic information which can be transmitted to a screen controller (13),
. transmit to the screen controller (13) of at least one remote broadcasting device (STV1, STV2) at least one sequence of graphic information which has been remotely produced by at least one remote producer, in such a way that this sequence is remotely broadcast on the television network channel.

2. Device according to claim 1, **characterized in that** it comprises the network management software means which allow remote control of the server device by any connected remote producer.

3. Device according to one of claims 1 or 2, **characterized in that** the input connection means (17) and IT resources (10, 11, 12) are adapted to authorize, at each instant, establishment of communication with any one and only one distant remote producer (OPi), who is the only one to access the IT resources (10, 11, 12) and to be able to produce a graphic information sequence.

4. Device according to one of claims 1 or 2, **characterized in that** the input connection means (17) and IT resources (10, 11, 12) are adapted to authorize, at each instant, establishment of communication with multiple distant remote producers (OPi), some different.

5. Device according to claim 4, **characterized in that** the IT resources (10, 11, 12) are adapted to allow access to these IT resources (10, 11, 12), at each instant, by one and only one connected remote producer (OPi).

6. Device according to claim 5, **characterized in that** the IT resources (10, 11, 12) are adapted so that they can be shared, at each instant, by multiple connected remote producers (OPi).

7. Device according to one of claims 1 to 6, **characterized in that** the IT resources (10, 11, 12), the means (21) of automatic capture and conversion, and the connection means (22) are adapted to be able to output the video signal live.

8. Device according to one of claims 1 to 7, **characterized in that** the IT resources (10, 11, 12) include means (12) of recording the graphic information sequences which at least one remote producer (OPi) remotely produces, and means (11) of programming the deferred remote broadcasting of these graphic information sequences.

9. Device according to one of claims 1 to 8, **characterized in that** the input connection means (17) are of the type with an access authorization code.

10. Device according to one of claims 1 to 9, **characterized in that** the input connection means (17) include means of identifying each connected remote producer (OPi), and the IT resources (10, 11, 12) are adapted to record the identification of each connected remote production (OPi) and associate it with each graphic information sequence which he or she remotely produces.

11. Device according to one of claims 1 to 10, **characterized in that** the first network (3) is an IP-compatible network.

12. Device according to one of claims 1 to 11, **characterized in that** the remote broadcasting device includes means, called sound card (15), which are capable of generating at least one sound signal, and **in that** the remote broadcasting device is adapted to incorporate each sound signal from its output of the sound card (15) into the video signal.

13. Device according to one of claims 1 to 12, **characterized in that** it comprises means (6, 18) of establishing independent audio communication - in particular by telephone - between the connected remote producer (OPi) and the single-channel connection means (22).

14. Device according to one of claims 1 to 13, **characterized in that** the input connection means (17) include means to receive digital information which represents graphic and/or sound information which are transmitted by a connected remote producer (OPi), the IT resources (10, 11, 12) being adapted to allow incorporation of this information in the remotely produced information sequences, and therefore in the video signal which is output and remotely broadcast on the said channel.

15. Device according to one of claims 1 to 14, **characterized in that** it comprises software means which are adapted to receive audio and/or video information sequences via the first network (2, 3), and to allow a connected remote producer (OPi) to address these sequences to at least one screen controller (13) and/or the sound card (15) of at least one remote broadcasting device, with the intention of incorporating them in the video signal which is output and remotely broadcast on the said channel.

16. Device according to one of claims 1 to 15, **characterized in that** the IT resources (10, 11, 12) include software means which are capable of opening files which represent graphic and/or sound information, a connected remote producer being able to make the server device open software which makes it possible to edit and display text and/or pictures and/or graphic animation and/or display effects and/or video sequences and/or sound, making it possible to remotely produce sequences to be remotely broadcast on the said channel, with and on the IT resources of the server device.

17. Device according to one of claims 1 to 16, **characterized in that** it comprises means, called output connection means (19), for output connection to at least one second digital information transmission network (3), these output connection means being adapted, like the IT resources (10, 11, 12), to enable a connected remote producer (OPi) to access this second network (3) from the server device to consult information and/or to load information remotely onto the server device, and then being addressed to at least one screen controller (13) of at least one remote broadcasting device.

18. Device according to one of claims 1 to 17, **characterized in that** the second network (3) is an IP-compatible network and the IT resources (10, 11, 12) include software means for navigating on this network.

19. Device according to one of claims 1 to 18, **characterized in that** the input connection means (17) include means of establishing communication according to at least one standard protocol - in particular H320 or H323 - making transmission of video conferences by the server device possible.

20. Device according to one of claims 1 to 19, **characterized in that** the connection means are chosen from the means of connection to a cable television network, the means of connection to a microwave television network, the means of connection to a digital television network via satellite.

21. Device according to one of claims 1 to 20, **characterized in that** it is presented in the form of a box enclosing a microcomputer central processing unit architecture.

22. Television network, **characterized in that** it comprises at least one server device according to one of claims 1 to 21.

## Patentansprüche

1. Servervorrichtung mit Selbstbedienung für die Multiproduzenten-Fernproduktion und die automatische Fernausstrahlung von Programmen auf einem Kanal von wenigstens einem Fernsehnetz (TV1, TV2) für alle Fernsehzuschauer (RTV1, RTV2), die diesen Kanal empfangen können und dürfen, wobei diese Servervorrichtung Folgendes umfasst:
- wenigstens ein IT-Gerät, Fernrundfunkgerät (STV1, STV2) genannt, das Folgendes umfasst:
. einen Bildschirmcontroller (13),
. Mittel (21) zum automatischen Erfassen und Umwandeln von Grafikinformationssequenzen, die an den Bildschirmcontroller (13) adressiert sind und von diesem verarbeitet werden, und die die Aufgabe haben, wenigstens ein Videosignal zu erzeugen, das diese Grafikinformationssequenzen repräsentiert und mit wenigstens einem Fernsehnetz (TV1, TV2) kompatibel ist,
. Mittel (22) für einen Einzelkanalanschluss mit einem Fernsehnetz (TV1, TV2), das die Aufgabe hat, auf dem genannten Kanal ein solches Videosignal zu senden, das von dem automatischen Erfassungs- und Umwandlungsmittel (21) ausgegeben wird,
- IT-Betriebsmittel (10, 11, 12) und Mittel, Eingangsverbindungsmittel (17) genannt, für eine Verbindung mit wenigstens einem ersten digitalen Informationsübertragungsnetz (2, 3), wobei die IT-Betriebsmittel (10, 11, 12) und die Eingangsverbindungsmittel die folgenden Aufgaben haben:
. Autorisieren der Herstellung einer Verbindung mit wenigstens einem beliebigen abgesetzten Fernproduzenten (OPi), angeschlossener Fernproduzent genannt, der zu einer Gruppe von Fernproduzenten gehört, die zur Herstellung einer Verbindung mit den IT-Betriebsmitteln (10, 11, 12) über wenigstens ein solches erstes Netzwerk (2, 3) in der Lage und autorisiert sind, indem ermöglicht wird, dass dieser angeschlossene Fernproduzent unter Fernsteuerung auf die IT-Betriebsmittel über das erste Netz (2, 3) zugreift,
. Bilden von IT-Produktionsmitteln, die es jedem angeschlossenen Fernproduzenten (OPi) ermöglichen können, auf wenigstens einen Teil der IT-Betriebsmittel (10, 11, 12) zuzugreifen und mit Hilfe dieser IT-Betriebsmittel, die er/sie über die Eingangsverbindungsmittel (17) fernsteuert, wenigstens eine Grafikinformationssequenz fernzuproduzieren, die zu einem Bildschirmcontroller (13) gesendet werden kann,
. Senden von wenigstens einer Grafikinformationssequenz, die von wenigstens einem Fernproduzenten fernproduziert wurde, von wenigstens einem Fernrundfunkgerät (STV1, STV2) zu dem Bildschirmcontroller (13) auf eine solche Weise, dass diese Sequenz auf dem Kanal des Fernsehnetzes fernausgestrahlt wird.

2. Vorrichtung nach Anspruch 1, **dadurch gekennzeichnet, dass** es Netzwerkmanagement-Software umfasst, die eine Fernsteuerung des Servergerätes durch jeden angeschlossenen Fernproduzenten zulässt.

3. Vorrichtung nach Anspruch 1 oder 2, **dadurch gekennzeichnet, dass** die Eingangsverbindungsmittel (17) und die IT-Betriebsmittel (10, 11, 12) die Aufgabe haben, zu jedem Zeitpunkt die Herstellung einer Verbindung mit nur einem einzigen beliebigen abgesetzten Fernproduzenten (OPi) zu autorisieren, der der einzige ist, der auf die IT-Betriebsmittel (10, 11, 12) zugreift und eine Grafikinformationssequenz produzieren kann.

4. Vorrichtung nach Anspruch 1 oder 2, **dadurch gekennzeichnet, dass** die Eingangsverbindungsmittel (17) und die IT-Betriebsmittel (10, 11, 12) die Aufgabe haben, zu jedem Zeitpunkt die Herstellung einer Verbindung mit mehreren verschiedenen abgesetzten Fernproduzenten (OPi) zu autorisieren.

5. Vorrichtung nach Anspruch 4, **dadurch gekennzeichnet, dass** die IT-Betriebsmittel (10, 11, 12) die Aufgabe haben, den Zugriff auf diese IT-Ressourcen (10, 11, 12) zu jedem Zeitpunkt durch nur einen einzigen angeschlossenen Fernproduzenten (OPi) zuzulassen.

6. Vorrichtung nach Anspruch 5, **dadurch gekennzeichnet, dass** die IT-Betriebsmittel (10, 11, 12) so gestaltet sind, dass sie zu jedem Zeitpunkt von mehreren angeschlossenen Fernproduzenten (OPi) gemeinsam genutzt werden können.

7. Vorrichtung nach einem der Ansprüche 1 bis 6, **dadurch gekennzeichnet, dass** die IT-Betriebsmittel (10, 11, 12), die Mittel (21) zum automatischen Erfassen und Umwandeln und die Anschlussmittel (22) so gestaltet sind, dass sie das Videosignal live ausgeben können.

8. Vorrichtung nach einem der Ansprüche 1 bis 7, **dadurch gekennzeichnet, dass** die IT-Betriebsmittel (10, 11, 12) Mittel (12) zum Aufzeichnen der von wenigstens einem Fernproduzenten (OPi) fernproduzierten Grafikinformationssequenzen und Mittel (11) zum Programmieren der zwischengespeicherten Fernausstrahlung dieser Grafikinformationssequenzen beinhalten.

9. Vorrichtung nach einem der Ansprüche 1 bis 8, **dadurch gekennzeichnet, dass** die Eingangsverbindungsmittel (17) von dem Typ mit einem Zugriffsberechtigungscode sind.

10. Vorrichtung nach einem der Ansprüche 1 bis 9, **dadurch gekennzeichnet, dass** die Eingangsverbindungsmittel (17) Mittel zum Identifizieren jedes angeschlossenen Fernproduzenten (OPi) aufweisen und die IT-Betriebsmittel (10, 11, 12) die Aufgabe haben, die Identifikation jedes angeschlossenen Fernproduzenten (OPi) aufzuzeichnen und sie mit jeder von ihm/ihr fernproduzierten Graphikinformationssequenz zu assoziieren.

11. Vorrichtung nach einem der Ansprüche 1 bis 10, **dadurch gekennzeichnet, dass** das erste Netzwerk (3) ein IPkompatibles Netzwerk ist.

12. Vorrichtung nach einem der Ansprüche 1 bis 11, **dadurch gekennzeichnet, dass** das Fernrundfunkgerät Mittel beinhaltet, Sound-Card (15) genannt, die wenigstens ein Tonsignal erzeugen können, und dadurch, dass das Fernrundfunkgerät die Aufgabe hat, jedes von der Sound-Card (15) ausgegebene Tonsignal in das Videosignal zu integrieren.

13. Vorrichtung nach einem der Ansprüche 1 bis 12, **dadurch gekennzeichnet, dass** sie Mittel (6, 18) zum Herstellen einer unabhängigen Audioverbindung - insbesondere per Telefon - zwischen dem angeschlossenen Fernproduzenten (OPi) und den Einzelkanalverbindungsmitteln (22) umfasst.

14. Vorrichtung nach einem der Ansprüche 1 bis 13, **dadurch gekennzeichnet, dass** die Eingangsverbindungsmittel (17) Mittel zum Empfangen von digitalen Informationen beinhalten, die Grafik- und/oder Toninformationen beinhalten, die von einem angeschlossenen Fernproduzenten (OPi) gesendet werden, wobei die IT-Betriebsmittel (10, 11, 12) die Aufgabe haben, die Integration dieser Informationen in die fernproduzierten Informationssequenzen und daher in das Videosignal zuzulassen, das auf dem genannten Kanal ausgegeben und fernausgestrahlt wird.

15. Vorrichtung nach einem der Ansprüche 1 bis 14, **dadurch gekennzeichnet, dass** Softwaremittel enthalten sind, die die Aufgabe haben, Audio- und/oder Videoinformationssequenzen über das erste Netzwerk (2, 3) zu empfangen und es zuzulassen, dass ein angeschlossener Fernproduzent (OPi) diese Sequenzen an wenigstens einen Bildschirmcontroller (13) und/oder an die Sound-Card (15) von wenigstens einem Fernrundfunkgerät adressiert, um diese in das Videosignal zu integrieren, das auf dem genannten Kanal ausgegeben und fernausgestrahlt wird.

16. Vorrichtung nach einem der Ansprüche 1 bis 15, **dadurch gekennzeichnet, dass** die IT-Betriebsmittel (10, 11, 12) Softwaremittel beinhalten, die Dateien öffnen können, die Grafik- und/oder Toninformationen repräsentieren, wobei ein angeschlossener Fernproduzent veranlassen kann, dass das Servergerät Software öffnet, die es ermöglicht, Text und/oder Bilder und/oder Grafikanimationen und/oder Anzeigeeffekte und/oder Videosequenzen und/oder Ton zu bearbeiten und anzuzeigen, so dass Sequenzen fernproduziert werden können, die auf dem genannten Kanal mit und auf den IT-Betriebsmitteln des Servergerätes fernausgestrahlt werden.

17. Vorrichtung nach einem der Ansprüche 1 bis 16, **dadurch gekennzeichnet, dass** Mittel, Ausgangsverbindungsmittel (19) genannt, für eine Verbindung mit wenigstens einem zweiten digitalen Informationssendenetzwerk (3) enthalten sind, wobei diese Ausgangsverbindungsmittel die Aufgabe haben, wie die IT-Betriebsmittel (10, 11, 12), es zu ermöglichen, dass ein angeschlossener Fernproduzent (OPi) auf dieses zweite Netzwerk (3) von dem Servergerät zugreift, um Informationen zu konsultieren und/oder um Informationen auf das Servergerät fernzuladen, die dann an den wenigstens einen Bildschirmcontroller (13) von wenigstens einem Fernrundfunkgerät adressiert werden.

18. Vorrichtung nach einem der Ansprüche 1 bis 17, **dadurch gekennzeichnet, dass** das zweite Netzwerk (3) ein IPkompatibles Netzwerk ist und dadurch, dass die IT-Betriebsmittel (10, 11, 12) Softwaremittel zum Navigieren auf diesem Netzwerk beinhalten.

19. Vorrichtung nach einem der Ansprüche 1 bis 18, **dadurch gekennzeichnet, dass** die Eingangsverbindungsmittel (17) Mittel zum Herstellen einer Verbindung gemäß wenigstens einem Standardprotokoll - insbesondere H320 oder H323 - beinhaltet, so dass Videokonferenzen von dem Servergerät übertragen werden können.

20. Vorrichtung nach einem der Ansprüche 1 bis 19, **dadurch gekennzeichnet, dass** die Anschlussmittel ausgewählt werden aus Mitteln für den Anschluss an ein Kabelfernsehnetz, Mitteln für den Anschluss an ein Funkfernsehnetz, Mitteln für den Anschluss an ein digitales Fernsehnetz per Satellit.

21. Vorrichtung nach einem der Ansprüche 1 bis 20, **dadurch gekennzeichnet, dass** sie die Form eines Kastens hat, der eine Mikrocomputer-Zentraleinheitsarchitektur beherbergt.

22. Fernsehnetz, **dadurch gekennzeichnet, dass** es wenigstens ein Servergerät nach einem der Ansprüche 1 bis 21 umfasst.
